(19) Europäisches Patentamt
European Patent Office
Office européen des brevets

(11) **EP 2 534 523 B1**

(12) **EUROPEAN PATENT SPECIFICATION**

(45) Date of publication and mention
of the grant of the patent:
**16.08.2017 Bulletin 2017/33**

(51) Int Cl.:
***G02B 26/08*** *(2006.01)*  ***G02B 26/10*** *(2006.01)*
***H02P 25/02*** *(2016.01)*

(21) Application number: **10703065.2**

(86) International application number:
**PCT/EP2010/051517**

(22) Date of filing: **08.02.2010**

(87) International publication number:
**WO 2011/095231 (11.08.2011 Gazette 2011/32)**

(54) **METHOD AND APPARATUS FOR CONTROLLING A MEMS MICRO-MIRROR DEVICE**

VERFAHREN UND VORRICHTUNG ZUR STEUERUNG EINER MEMS-MIKROSPIEGELVORRICHTUNG

PROCÉDÉ ET APPAREIL PERMETTANT DE COMMANDER UN DISPOSITIF À MICRO-MIROIR DE SYSTÈME MICRO-ÉLECTROMÉCANIQUE (MEMS)

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**19.12.2012 Bulletin 2012/51**

(73) Proprietor: **Intel Corporation**
**Santa Clara, CA 95054 (US)**

(72) Inventors:
• **KILCHER, Lucio**
**CH-1820 Montreux (CH)**
• **ABELÉ, Nicolas**
**CH-1005 Lausanne (CH)**
• **CHEVALLAZ, Eric**
**CH-1318 Pompaples (CH)**

(74) Representative: **Rummler, Felix et al**
**Maucher Jenkins**
**26 Caxton Street**
**London SW1H 0RJ (GB)**

(56) References cited:
EP-A1- 1 275 998    EP-A1- 2 120 011
EP-A2- 1 515 424    WO-A2-02/18979
JP-A- 2003 177 347    US-A1- 2002 163 675
US-A1- 2006 001 940

**EP 2 534 523 B1**

**Description**

Field of the invention

The present invention concerns a method and an apparatus for controlling a MEMS micro-mirror device.

Description of related art

A MEMS micro-mirror device is a device that contains an optical MEMS (Micro-Electrical-Mechanical System). The optical MEMS may comprise a cylindrical, rectangular or square micro-mirror that is adapted to move and to deflect light over time. The micro-mirror is connected by torsion arms to a fixed part and can tilt and oscillate along one or two axis. For example it can oscillate vertically and horizontally. Different actuation principles can be used, including electrostatic, thermal, electro-magnetic or piezo-electric. MEMS devices are known in which the area of these micro-mirrors are around a few mm2. In this case, the dimensions of the MEMS device, comprising the packaging, is around ten mm2. This device is usually made of silicon, and can be encapsulated in a package that can include the driving actuation electronics. Various optical components, such as for example lenses, beam combiner, quarter-wave plates, beam splitter and laser chips, are assembled with the packaged MEMS to build a complete system.

A typical application of this device is for optical scanning and projection system. Each of these applications requires a system that is able to actuate the device and to detect the tilting angle of the micro-mirror at any time. For optical scanning applications, such as optical spectrometers and barcode scanner, the scanning operation has for example to be synchronized with the measurement system and the detection scheme.

In a projection system, an image or a video can be displayed on any type of surface: each pixel is generated for example by combining modulated red, green and blue laser light sources, for example by means of a beam combiner. A MEMS micro-mirror device directs this beam of light to a projection surface and reproduces the image or the video pixel by pixel. By means of its oscillations, the micro-mirror can continuously scan for example from left to right and from top to bottom.

The control of the micro-mirror deflection angle and of the micro-mirror scanning frequency is essential for the projection as it relates directly to the size of the projected image. A consequence of the absence of position sensing of the micro-mirror deflection, also called position sensor, could result in the difficulty or impossibility to synchronize the light source modulation with the micro-mirror movements, then making the system not suitable for projection and scanning purpose: the size of the projected image can vary over time, the image geometry can vary for example from a rectangular shape to an oval, trapezoidal or cushion shape.

Different control and position sensing systems are possible for the micro-mirror and some of them have been developed in the past. In one approach, the position of the micro-mirror may be determined by using photodetectors. The principal drawback of this solution is the use of additional components that enlarge the volume of the overall MEMS device.

Another approach is the addition of resistive material on the torsion arms. Weston bridges have been used to sense micro-mirror position. In this case, the system measures the induced resistance change of the resistor when the torsion arms are subject to deformations due to the micro-mirror movement. The change in resistance can be correlated with the position of the micro-mirror. In this system, the resistor is typically a doped area of the silicon. This system however adds complexity in term of fabrication, and is usually sensitive to fabrication process variations and is considered as an electronically noisy system in term of parasitic, then lowering the sensing performances. Moreover there is again a drawback in term of space consumption.

Also known in the prior art are capacitive sensing systems, where a voltage, created between a fixed electrode placed on the fixed part of the device and a second electrode place on the moving micro-mirror, is related to the position of the micro-mirror. In this case indeed, the voltage is dependent of the surface area between the two electrodes and as the micro-mirror is deflecting, this surface is varying. Therefore a change of the capacitance between these two electrodes gives information about the deflection angle of the micro-mirror. This system has however certain limitations, especially for large micro-mirror deflection typically used for projection application. The deflection sensing is then only possible when the electrodes are facing each other. Therefore, the fixed electrode placed on the fixed part of the device should be of similar dimension than the deflection amplitude (around 175 $\mu$m for scanning amplitude of 10 degrees for example, with a micro-mirror length of 2 millimeters), which is difficult to manufacture by using semi-conductor equipments.

US2009153932 describes a MEMS micro-mirror device. The sensing electronics determines the rotational position of the micro-mirror by sensing a parameter related to the rotational position, for example the capacitance between fixed comb fingers of MEMS frame, and moving comb fingers of the micro-mirror. This sensing electronics is used only when the drive signal is not being transmitted by the drive electronics, in order to reduce the perturbations sensibility. The drive signal has a waveform, for example a sinusoidal-type waveform, allowing sensing during the "dead periods" between drive signals. This capacitance sensing is used to determine the exact instant when the micro-mirror oscillates at the zero crossing of the drive signal waveform, but is useless for determining other parameters of the system. Further pertinent prior art is described in EP 2 120 011 A1, EP 1 515 424 A2, WO 02/18979 A2, US 2002/163675 A1, US 2006/001940 A1, EP 1 275 998 A1 and JP 2003 177347 A.

According to the state of art, a simple method and apparatus to precisely control the micro-mirror deflection amplitude and to sense the position of the micro-mirror during deflection are needed.

A simple method and apparatus that detect the deflection angle of the micro-mirror at any time of its deflection and not only at its maximum deflection or not only at one particular position is also needed.

Brief summary of the invention

The aim of the present invention is to provide a method and an apparatus for controlling a MEMS micro-mirror device exempt from the limitations of the prior art.

One object of the present invention is to provide a method and an apparatus for sensing and controlling the micro-mirror positions allowing a quality of projected images and videos which is higher than the quality of prior art systems.

Another object of the present invention is to provide a method and an apparatus to prevent the beaming of the light in case of an unexpected default of the projection system.

Another object of the present invention is to provide a method and an apparatus to prevent the electrical risk in case of an unexpected default of the electrical components of the device or if the current value exceeds an initially defined threshold.

Another object of the present invention is to provide a method and an apparatus able to adapt itself to internal or external temperature changes and to external mechanical events, such as shocks or vibrations.

Another object of the present invention is to provide a method and an apparatus that simplify the assembly process of the MEMS device and reduce manufacturing costs.

Another independent object of the present invention is to provide a method and an apparatus allowing a continuous measurement of micro-mirror positions.

According to the invention, these aims are achieved by means of a method for controlling a MEMS micro-mirror device according to claim 1 and by an apparatus for controlling a MEMS micro-mirror device according to claim 9.

According to an independent aspect of the present invention, some of these aims are achieved by means of an apparatus comprising a drive coil and an independent sensing coil, in order to use two independent electrical coils respectively for drive the micro-mirror and for sensing its positions. This feature can also be used independently or in combination with the features of other claims.

Advantages of the solution as compared with the prior art include in particular the possibility to improve the quality of projected images and videos, to avoid undesired changes of size of the projected images and videos, to have a good safety system, to detect internal or external change by using a feedback control loop and a continuous measure of the micro-mirror positions.

Brief Description of the Drawings

The invention will be better understood with the aid of the description of an embodiment given by way of example and illustrated by the figures, in which:

Fig. 1 shows a view of a projection system.
Fig. 2 shows a MEMS micro-mirror device.
Fig. 3 shows a projection system based on one mirror with double oscillation axis.
Fig. 4 shows a projection system based on two mirrors with single oscillation axis.
Fig. 5 shows one embodiment of a system of magnetic sensing.
Fig. 6a shows a top view of a MEMS micro-mirror device with two independent electrical coils and a magnet placed next to the fixed part of the device.
Fig. 6b shows another top view of a MEMS micro-mirror device with two independent electrical coils and a magnet placed under the device.
Fig 7 shows a graphic of the induced voltage amplitude over time.
Fig. 8 shows an electrical system used for the induced voltage measurement.
Fig. 9 shows a diagram of the feedback control of the micro-mirror.
Fig. 10 shows an example of architecture for the mixing of multiple laser sources to achieve a single colored light beam, with a cube beam splitter and two micro-mirrors.

Detailed Description of possible embodiments of the Invention

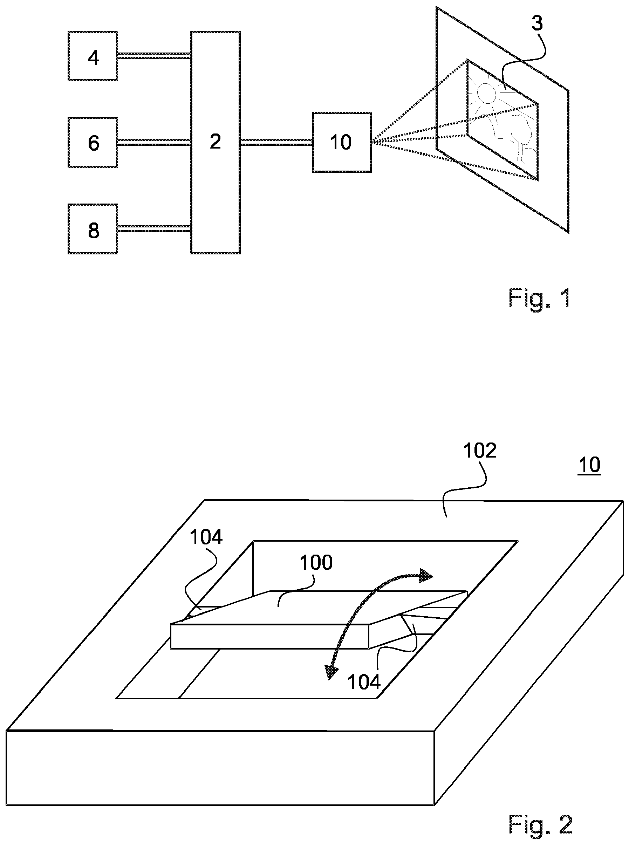

Figure 1 shows a diagrammatic view of a projection system according to one embodiment. An image or a video 3 is displayed by pulsing three laser light sources, Red 4, Blue 6 and Green 8, during the scan of a MEMS micro-mirror device 10. Thus, an image is created pixel-by-pixel by controlling the color and brightness at each position of the scanned beam. Laser light sources provide a large energy in a short spectral bandwidth. The image color is achieved by mixing the three basic RGB colors 4, 6, 8 for example with a beam-combiner 2. In this system, the MEMS micro-mirror function is to continuously and reflectively scan, for example from left to right and from top to bottom, in order to reproduce the desired image pixel by pixel onto any projection surface.

The device 10 presented in Figure 2 can be encapsulated in a package, possibly with the calculating and driving circuits on the same die. This packaged component (the MEMS device) is then assembled with the three laser light sources, the beam combiner, and possible lenses, quarter-wave plates and beam splitter.

The MEMS micro-mirror device 10 is a moving structure adapted to deflect light over time. This structure is advantageously built on a silicon substrate. Different actuation principles are possible for moving the mirror, including magnetic, electrostatic (through charges rejection), thermal (through resistor heating) or also piezoelectric actuation.

An example of such moving structure is presented in Figure 2 where a rectangular MEMS micro-mirror 100 is anchored to a fixed body 102 by two torsion arms 104. The micro-mirror 100 is positioned to receive a light beam. It oscillates at a frequency $\overline{\omega}$ to reflectively scan the light beam. This operational frequency $\overline{\omega}$ is about equal to the resonant frequency characteristic of the MEMS device. In one embodiment, the maximum intrinsic silicon material gain is used, when working at or close to the mechanical resonance of the MEMS device, in order to obtain the widest possible scanning angle of the micro-mirror at a low power consumption level.

According to Figure 2, the micro-mirror oscillates along one axis. In this case, two MEMS devices are used to scan the light in two dimensions. In one embodiment, the micro-mirror oscillates according to a sinusoidal-type law. Other functions may be used for driving the mirrors, including e.g. square, triangle or saw tooth functions.

Other micro-mirror embodiments (not shown) can be used where a single micro-mirror can oscillate along two orthogonal axes, and scan the light beam in two dimensions.

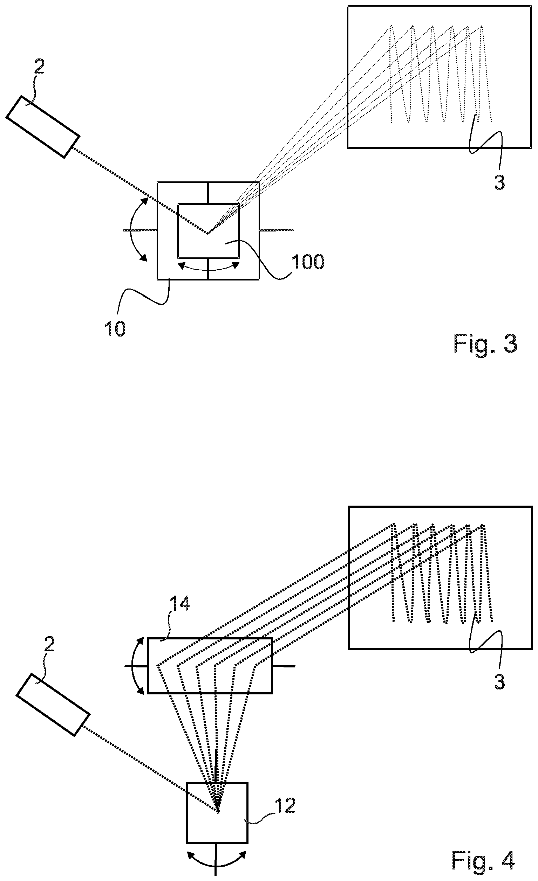

Figure 3 shows a first possibility to scan from left to right and top to bottom by using a single micro-mirror 100 that can oscillate along two perpendicular axes, in order to reproduce the image 3. Figure 4 shows another embodiment with a system that includes two micro-mirror devices 12, 14; each device can oscillate along only one axis. The two axes are perpendicular. The light source 2 is received by the first device 12 and then reflected by this device onto the second device 14.

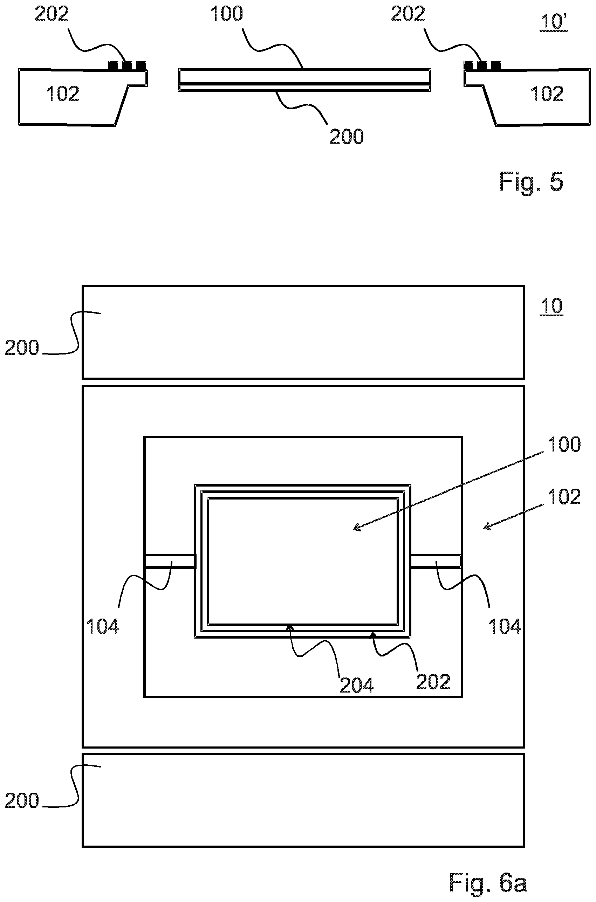

Figure 5 shows one embodiment of the MEMS micro-mirror device where a sensing coil 202 is placed on the fixed part of the device for detecting the position of the micro-mirror 100. It can be a single-loop coil or a multi-loop coil. A magnet 200 is placed directly on or under the micro-mirror surface 100. Displacement of the magnet 200 induces a voltage in the sensing coil 202, the amplitude and phase of this voltage being dependent on the position and displacement of the micro-mirror of the device 10'.

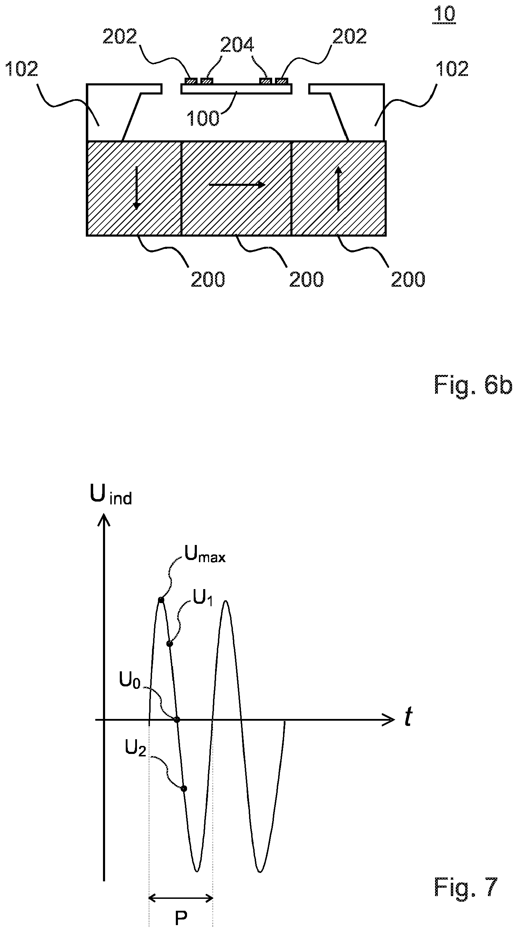

In another embodiment of the MEMS micro-mirror device, as shown in Figures 6a and 6b, the sensing coil 202 is placed on the micro-mirror surface, for example near the micro-mirror's edge, and a magnet 200 is placed near the fixed part 102 of the MEMS device. According to the Faraday's law, a voltage is induced in the sensing coil 202, which is moving in the fixed magnetic field created by the magnet 200.

In these two embodiments and in the case of an electromagnetic actuation of the micro-mirror, the same coil can be used for moving the mirror and for sensing its position. In this case, a driving circuit generates a current which is injected in this coil, in order to actuate the micro-mirror. A sensing circuit measures a signal induced in the same coil, and detects variations in this signal caused by displacement of the magnet near the coil or of the coil near the magnet for the respective embodiments. In one embodiment the measured signal is compared with the injected signal in order to detect possible differences, which are functions of the induced signal. In another embodiment, a spectral analysis of the measured signal is done, in order to obtain informations on the induced signal by the possible spectral components generated in the injected signal by the movement of the micro-mirror.

In another possibly independent embodiment, in the case of an electromagnetic actuation of the micro-mirror, two coils are used. In this case, a sensing coil 202 and another drive coil 204 are independently placed on the movable part near the micro-mirror, for example on the micro-mirror itself, near the micro-mirror's edge as illustrated with Figures 6a and 6b. The drive coil 204 is dedicated to actuate the micro-mirror and the sensing coil 202 to sense the induced voltage. The electric current flowing in the drive 204 coil, under a magnetic field, induces a mechanical displacement of the mirror which can be used for optical scanning. The fixed magnetic field is generated by a magnet 200 placed near the fixed part of the MEMS device 10 as shown in Figure 6a or under the MEMS device 10 as shown in Figure 6a. Each coil can be a single-loop coil or a multi-loop coil, preferably multi-loop in order to reduce the current required to actuate the micro-mirror and to increase the induced voltage. The more the drive coil is close to the micro-mirror edge, the greater the micro-mirror deflection angle will be. The more the sensing coil is close to the micro-mirror edge, the higher the level of the position signal will be. It is thus possible to sense the induced voltage independently of the actuation signal, in order to have a large signal-over-noise ratio for the sensed voltage. This technique also enables a continuous measurement of the micro-mirror position.

Other kinds of actuation of the MEMS micro-mirror are possible, including energy sources other than electro-magnetic. For example, the micro-mirror can be driven by electrostatic, thermal or piezoelectric means. In this case, detection of the mirror position can be made with a sensing coil on the moving part and a fixed magnet, for example on the micro-mirror or the other way round.

When a coil, such as the sensing coil 202, is moving in a fixed magnetic field, such as the field generated by the fixed magnet 200 (Figures 6a, 6b), or when a coil, such as the sensing coil 202, is in a moving magnetic field, such as the field generated by the moving magnet 200 in figure 5, an induced voltage $U_{ind}$ is created according to the law

$$U_{ind} = -\frac{d}{dt}\Phi(t) \qquad (1)$$

where $\Phi(t)$ is the magnetic flux through the electrical coil.

In the case of a micro-mirror, the induced voltage $U_{ind}$ is dependent on the scanning frequency of the micro-mirror $\overline{\omega}$ (function of the Young module), the scanning angle $\alpha$, the micro-mirror dimensions W, L and the applied magnetic field B according to the well-known basic Faraday's law for vibrating structure, used for long time in moving mechanical mirror also called galvanometers mirror. The induced voltage $U_{ind}$ can be approximated as

$$U_{ind} = \omega \cdot B \cdot W \cdot L \cdot \sin(\alpha) \qquad 2)$$

According to this equation, the measurement of that voltage $U_{ind}$ then enables to calculate the scanning angle $\alpha$ which corresponds to the position of the micro-mirror. The maximum scanning angle is $\alpha_{max}$ and results in the maximum of induced voltage $U_{indmax}$ for a defined magnetic field B and micro-mirror dimensions W, L and scanning frequency $\overline{\omega}$.

An example of a periodical signal (here a voltage) induced in the sensing coil 202 when the micro-mirror is moving is shown in the Figure 7. In the invention, the waveform of this voltage is sinusoidal or close to it, with a period P. It is possible to measure this induced signal at least once during each period P, and preferably once for each oscillation axis. The measuring circuit can use for example a high impedance amplifier whose output is feed to an analog to digital converter. The person skilled in the art can visualize other means for measuring this induced voltage.

In one embodiment one terminal of the sensing coil is connected to a ground and the other one is connected to the input amplifier. In another embodiment, each sensing coil terminal is connected to one of the two input amplifier, in order to take a differential measurement.

In one embodiment, the amplifier is integrated in the package of the device together with the MEMS micro-mirror. The amplifier's functionality is then implemented on the same die than the other circuits of the device. In another embodiment, the amplifier is part of another integrated circuit that can be connected to the sensing coil with the same kind of connection that are also used for interconnecting other modules, by using for example lateral bonding or vertical bonding (BGA).

The amplifier can be built by using a general purpose operational amplifier or, if needed, it can make use of an instrumental amplifier, in order to improve the sensitivity.

The instant at which the value of the peak $U_{max}$ has to be measured can be determined for example by means of numerous measures of induced voltage or by means of a comparator. Since the waveform is approximately symmetric, the knowledge of $U_{max}$ allows calculating circuit to determine the position of the other peak $U_{min}$ and thus to determine the peak-to-peak amplitude ($U_{max} - U_{min}$) of the induced signal. The system symmetry also enables to determine the zero crossing induced voltage value $U_0$.

According to the previous equation, this peak-to-peak amplitude is related to the scanning angle $\alpha$ of the micro-mirror with a well-known law. The calculating circuit then can determine the movement amplitude of the micro-mirror. A consequence of the micro-mirror position knowledge is for example the control of the size of the projected image over time.

The calculating circuit can be formed for example by an FPGA integrated in the same device 10 in order to simplify the assembly process and to reduce manufacturing costs. In another embodiment, this calculating circuit uses another discrete component, for example an ASIC connected to the MEMS device, a separate FPGA, and/or a specially programmed microprocessor or digital signal processor.

In the invention, three measures $U_{max}$, $U_1$ and $U_2$ of induced signal are made during each period P for each oscillation axis of the micromirror. The calculating circuit then enables, through an interpolation of this values, to determine the shape of the induced signal waveform and then the position of the micro-mirror in each instant. This allows a quality of projected images and videos higher than the quality of the systems where the position of the micro-mirror in each instant is not measured.

In an aspect not forming part of the invention, more than three measures of the induced signal are made during each period P and for each oscillation axis. For example, the value of this signal can be sampled and held at the desired sampling frequency. This allows a determination of the induced signal even when its form is not sinusoidal or not known.

Measurement of the induced voltage is in practice difficult, mainly due to the fact that the voltage amplitude is very low as compared for example to the driving voltage. Moreover, electrical and mechanical parasitic effects affect the sensing signal. In order to reduce those perturbations, in one embodiment of the invention, a measure that enables to decouple the driving signal that actuates the micro-mirror from the signal measured in the sensing coil is made.

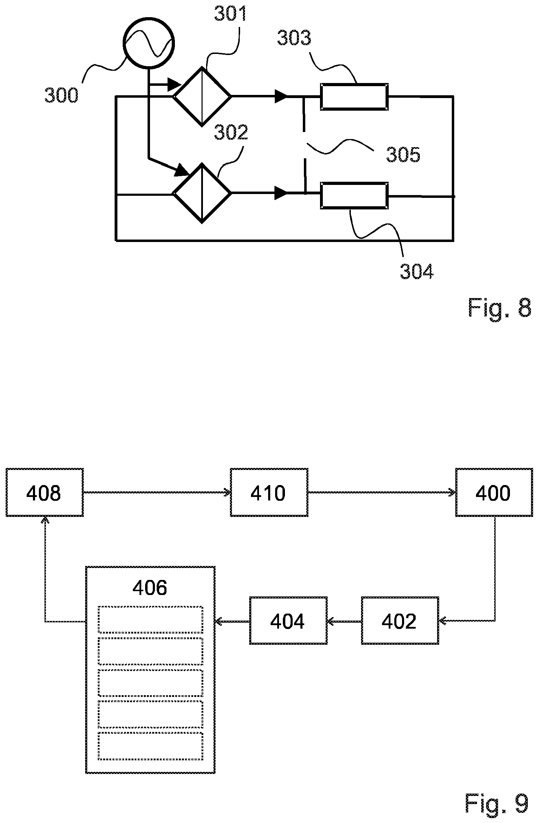

Figure 8 presents a system where a voltage source 300 supplies two identical parallel current sources 301 and 302, delivering two identical currents through the MEMS micro-mirror sensing coil 303 and through a reference resistor 304 having similar value than the MEMS micro-mirror and having similar drifts, including thermal drift. The system then enables the measurement of the voltage drop 305, which corresponds exactly to the induced voltage of the MEMS micro-mirror, according to the following equation:

$$U_{measured} = U_{mirror} - U_{ref} = R_{mirror} \cdot I + U_{ind} - R_{ref} \cdot I \approx U_{ind} \qquad (3)$$

This system thus enables to eliminate in the measuring circuit the fixed voltage over the resistor due to the actuation current flowing through it. The precision of the induced voltage is enhanced.

The person skilled in the art can visualize other embodiments of differential measure. It is possible for example to use two sensing coils, one placed in the moving mirror and one placed on the fixed part 102 of the chip as reference, and to determine a difference in signal induced in those two coils. The advantage of a differential measure is the elimination of the common modes, depending on external parameters such as the temperature and the errors compensation.

In another example, in order to limit parasitic and cross effects during measurement and to reduce the power consumption, a method based on modulating the actuation phase during the measurement is used. Due to the geometry and actuation of the micro-mirror and due to the amount of inertial energy in the micro-mirror during that actuation, the deflection of the micro-mirror will not stop completely when the actuation signal is stopped; instead, the micro-mirror will continue to deflect during a certain time. The measure of the induced signal is made during this period. The advantage of this technique is that during the measurement time, there is no actuation current flowing through the drive coil, thus avoiding any degradation of the sense signal by means of parasitic frequencies excitation and thermal noise effects. The measured signal-over-noise ratio of the induced voltage is therefore much higher than what could be measured by doing the actuation and the detection of the signal at the same time. The position of the micro-mirror could be sensed much more precisely and then it can be used to increase the projection image quality.

In another example, it is possible to control the actuation in order to be able to stop the actuation only for a period of time that could be equal to half of the period or a complete oscillation period. Then the amount of energy loss in the micro-mirror and also the loss in scanning deflection amplitude are minimized. The amplitude diminution can then be limited to a level where the human eye do not perceive any change, and at the same time enables to measure the induced voltage of the micro-mirror without having actuation current flowing.

To further increase the signal-over-noise ratio of the induced voltage, a specific circuit architecture can be provided for averaging at least two successive measurements during the non-actuation period of the micro-mirror.

According to an aspect not forming part of the invention, the measure during one period of the induced voltage, in any case of actuation, is sufficient to determine the scanning angle $\alpha$ and the scanning frequency $\overline{\omega}$ by using the electronics circuits that senses the maximum or the minimum amplitude of the induced voltage $U_{max}$ or $U_{min}$. Indeed, the measure of the time between the minimum and maximum induced voltages $U_{min}$ and $U_{max}$ respectively will provide the information about the scanning frequency $\overline{\omega}$. And the measure of the maximum or minimum of induced voltage are derived from equation (2), as the magnetic field B is known, given by the magnetic permanent magnet architecture, the scanning frequency $\overline{\omega}$ is calculated and the coil dimensions are known.

In another example not forming part of the invention, a second measure of induced voltage during one period can be made and is useful for determining with greater accuracy the value of this scanning frequency $\overline{\omega}$ by averaging the measures.

The sensing coil in practice has also a resistive component. The knowledge of $\overline{\omega}$ and $\alpha$, and then of $U_{ind}$, enables the determination of the value of this resistive part even when a drive signal is applied. In one embodiment the drive signal is a know current in the same coil. The measured voltage, sensed by an electronics circuit is a function of the following parameters:

$$U_{meas} = I \cdot Z_{coil} + U_{ind} \qquad (4)$$

According to the equation (4), $U_{meas}$ and $U_{ind}$ are known. The value of the current I is the current injected. The value of the current injected can be known or can be determined as a function of the other measured parameters, as will be shown later. It is possible then to determine the real part of the impedance of the coil $Z_{coil}$, i. e. its resistive component.

If a rapid change of resistivity is detected, this may be an indicia that the system does not correctly work or that the driving coil could break very soon. In this case, it may be safer to stop the laser sources and to prevent projection of laser light in an undesired direction, which could be dangerous for human eyes. The monitoring of this resistivity is thus a safety system, and can be used to prevent the beaming of light in case of failure of the projection system.

When a drive signal is applied, the comparison of an induced voltage measure during a positive half period with an induced voltage measure during a negative half period enables the calculating circuit to determine the value of the actuation current I in the case of electromagnetic actuation according to the system

$$\begin{cases} U_{meas} = U_{ind} + I \cdot Z_{coil} & 1/2P \text{ positive period} \\ U_{meas} = U_{ind} - I \cdot Z_{coil} & 1/2P \text{ negative period} \end{cases}$$

The knowledge and the monitoring of this value over time enable to prevent electrical risks in case of an unexpected default of the electrical components of the device or if this current value exceeds an initially defined threshold.

The drive current which is needed for producing an oscillation of the mirror with a mirror scanning angle $\alpha$ can be measured during several oscillation periods and used for verifying a possible variation of the magnetic field B between those periods. For instance, if the magnetic field B is reduced, the mirror scanning angle $\alpha$ will be reduced, thus generating a different induced voltage. If we then force the mirror to keep the same scanning angle $\alpha$ by imposing a larger current in order to produce the same induced voltage, we can compute with above Equation 2 the variation of the magnetic field that required this larger current.

The value of the magnetic field B also depends on the temperature as permanent magnet can be demagnetized at high temperature. Changes of this value B can reflect internal or external temperature changes. If the measure of the magnetic field corresponds to a temperature higher than a defined threshold, it is for example possible to activate a ventilator or to modify the speed of an existing ventilator.

The knowledge and the monitoring of sudden and abrupt changes of some calculated values (frequency of the micro-mirror, scanning angle, positions of the micro-mirror, resistor of the sensing coil, magnetic field) further enable to determine also external mechanical events, such as shocks or vibrations.

According to another aspect of the invention, a feedback control loop enables the control of the micro-mirror as shown in Figure 9. Several different pieces of information have to be sensed, measured and synchronized in order to control at the same time two parameters for driving the micro-mirror: the scanning frequency and the scanning amplitude. This control and synchronization is made complex because of the fact that these parameters vary in a different ways depending on internal or external temperature changes for example, but also depending on mechanical events such as shock or vibrations.

Figure 9 describes an example of general building block of a drive system for driving the micro-mirror. Induced signal values 402 are processed by the calculating circuit 404 in order to obtain information on the micro-mirror scanning frequency, scanning amplitude, position over time, on the value of the resistive part of the sensing coil, of the magnetic field generated by the magnet, on the temperature change and on the external events 406. This information is sent to a control system 408 for controlling the micro-mirror and the light sources, in order to modify the actuation commands 410 that enable the micro-mirror motion 400 and to control the light emission.

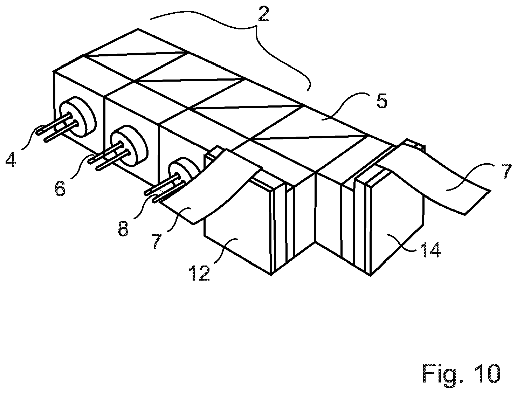

Figure 10 shows a particular embodiment of a projection system. In this embodiment, the micro-mirror of the device 12 has only one oscillation axis, the micro-mirror of the device 14 has another oscillation axis perpendicular to the axis of the device 12, according to the system shown in Figure 4. A beam combiner 2, which combines the lights coming from three lasers 4, 6, 8, is specifically designed in order to have the same side dimensions as the cube beam splitter 5. The projection system shown in Figure 10 is assembled in stacked monolithic blocks by using a technology involving mutually cooperating contact faces. Electric cables 7 enable the driving of MEMS devices 12, 14.

## Claims

1. A method of measuring the amplitude of the movement of a micro- mirror (100) of a MEMS device (10; 10') oscillating by means of an actuating circuit, said device comprising a magnet (200) and a sensing coil (202), one of said magnet or sensing coil being placed on a fixed part (102) while the other one of said magnet or sensing coil is placed on said micro-mirror (100), said method comprising the following steps:

- determining the instant at which the peak value $U_{max}$ of a sinusoidal signal ($U_{ind}$) induced in the sensing coil is to be measured,
during each period (P) of a sinusoidal signal induced in said sensing coil (202) placed in the magnetic field (B) generated by said magnet (200), measuring three values of said periodical signal induced ($U_{ind}$), **characterized in that** the three values comprise $U_{max}$, $U_1$, and $U_2$, wherein $U_{max}$ is a peak of the induced signal, the method further **characterized by**:

- processing said values $U_{max}$, $U_1$, and $U_2$ by means of a signal processing system (404) to determine a value depending on the amplitude of said induced signal, and
- interpolating said values $U_{max}$, $U_1$, and $U_2$ to determine the position at each instant of said micro-mirror (100).

2. The method of claim 1, including a step of processing said values $U_{max}$, $U_1$, and $U_2$ to determine the scanning frequency of said micro-mirror (100).

3. The method of one of claims 1 to 2, wherein said actuating circuit comprises a drive coil (204) placed on said micro-mirror (100) of said device (10; 10') and a system for injecting current in said drive coil (204).

4. The method of claim 3, wherein said drive coil (204) is the sensing coil (202).

5. The method of claim 4, including a step of processing said values $U_{max}$, $U_1$, and $U_2$ to determine a variation of values of the resistance of said drive coil (204).

6. The method of one of the claims 3 to 5, including a step of processing said values $U_{max}$, $U_1$, and $U_2$ to determine the value of the magnetic field (B) generated by said magnet (200).

7. The method of one of the claims 1 to 6, wherein the signal processing system (404) is integrated in said MEMS device (10; 10').

8. The method of one of the claims 3 to 7, wherein a current in said drive coil (204) is stopped during said measure.

9. An apparatus comprising
a MEMS micro-mirror device (10; 10') having a fixed part (102) and a micro-mirror (100) that can oscillate along at least one oscillation axis,

- a magnet (200) and a sensing coil (202), one of said magnet or sensing coil being placed on said fixed part while the other one of said magnet or sensing coil is oscillating with said micro-mirror (100),
- an actuating circuit for generating a periodical oscillation of said device (10; 10') around said oscillation axis,
- a detecting circuit (402) for detecting three values of a sinusoidal induced signal ($U_{ind}$) induced in said sensing coil (202) during each period, **characterized in that** the three values comprise $U_{max}$, $U_1$ and $U_2$, wherein $U_{max}$ is a peak of the induced signal and wherein the apparatus is configured for determining the instant at which the peak value U of the sinusoidal signal ($U_{ind}$) induced in the sensing coil is to be measured, and **in that** the apparatus further comprises:

- a signal processing system (404) for calculating the amplitude of the movement of said micro-mirror (100) by means of said values $U_{max}$, $U_1$, and $U_2$ and interpolating said values $U_{max}$, $U_1$, and $U_2$ to determine the position at each instant of said micro-mirror (100).

10. The apparatus of claim 9, wherein said detecting circuit (402) comprises an operational amplifier for amplifying said induced signal.

11. The apparatus of one of the claims 9 or 10, wherein said actuating circuit comprises a drive coil (204) placed on said micro-mirror (100) and a system for injecting current in said drive coil (204).

**12.** The apparatus of claim 11, wherein said drive coil (204) is said sensing coil (202).

**13.** The apparatus of one of the claims 9 to 12, wherein said detecting circuit (402) allows a differential measure.

**Patentansprüche**

**1.** Verfahren zum Messen der Amplitude der Bewegung eines Mikrospiegels (100) einer MEMS-Vorrichtung (10; 10'), der mit Hilfe einer Erregerschaltung oszilliert, wobei die Vorrichtung einen Magneten (200) und eine Erfassungsspule (202) umfasst, wobei der Magnet oder die Erfassungsspule auf einem festen Teil (102) positioniert ist, während der andere des Magneten und der Erfassungsspule auf dem Mikrospiegel (100) positioniert ist, wobei das Verfahren die folgenden Schritte umfasst:

- Bestimmen des Zeitpunkts, zu dem der Spitzenwert $U_{max}$ eines in der Erfassungsspule induzierten sinusförmigen Signals ($U_{ind}$) zu messen ist,
während jeder Periode (P) eines in der Erfassungsspule (202), die in dem durch den Magneten (200) erzeugten Magnetfeld (B) positioniert ist, induzierten sinusförmigen Signals, und Messen von drei Werten des induzierten periodischen Signals ($U_{ind}$), **dadurch gekennzeichnet, dass** die drei Werte $U_{max}$, $U_1$ und $U_2$ umfassen, wobei $U_{max}$ ein Spitzenwert des induzierten Signals ist, wobei das Verfahren ferner **gekennzeichnet ist durch**:

- Verarbeiten der Werte $U_{max}$, $U_1$ und $U_2$ mit Hilfe eines Signalverarbeitungssystems (404), um einen Wert zu bestimmen, der von der Amplitude des induzierten Signals abhängt, und
- Interpolieren der Werte $U_{max}$, $U_1$ und $U_2$, um die Position des Mikrospiegels (100) in jedem Zeitpunkt zu bestimmen.

**2.** Verfahren nach Anspruch 1, das einen Schritt enthält, die Werte $U_{max}$, $U_1$ und $U_2$ zu verarbeiten, um die Abtastfrequenz des Mikrospiegels (100) zu bestimmen.

**3.** Verfahren nach einem der Ansprüche 1 bis 2, wobei die Erregerschaltung eine Antriebsspule (204), die auf dem Mikrospiegel (100) der Vorrichtung (10; 10') positioniert ist, und ein System zum Einspeisen von Strom in die Antriebsspule (204) umfasst.

**4.** Verfahren nach Anspruch 3, wobei die Antriebsspule (204) die Erfassungsspule (202) ist.

**5.** Verfahren nach Anspruch 4, das einen Schritt enthält, die Werte $U_{max}$, $U_1$ und $U_2$ zu verarbeiten, um eine Variation von Werten des Widerstands der Antriebsspule (204) zu bestimmen.

**6.** Verfahren nach einem der Ansprüche 3 bis 5, das einen Schritt enthält, die Werte $U_{max}$, $U_1$ und $U_2$ zu verarbeiten, um den Wert des durch den Magneten (200) erzeugten Magnetfelds (B) zu bestimmen.

**7.** Verfahren nach einem der Ansprüche 1 bis 6, wobei das Signalverarbeitungssystem (404) in die MEMS-Vorrichtung (10; 10') integriert ist.

**8.** Verfahren nach einem der Ansprüche 3 bis 7, wobei ein Strom in der Antriebsspule (204) während der Messung gestoppt wird.

**9.** Vorrichtung, die Folgendes umfasst:

eine MEMS-Mikrospiegelvorrichtung (10; 10') mit einem festen Teil (102) und einem Mikrospiegel (100), der zumindest entlang einer Oszillationsachse oszillieren kann,

- einen Magneten (200) und eine Erfassungsspule (202), wobei der Magnet oder die Erfassungsspule auf dem festen Teil positioniert ist, während der andere des Magneten oder der Erfassungsspule mit dem Mikrospiegel (100) oszilliert,
- eine Erregerschaltung zum Erzeugen einer periodischen Oszillation der Vorrichtung (10; 10') um die Oszillationsachse,
- eine Detektionsschaltung (402) zum Detektieren von drei Werten eines induzierten sinusförmigen Signals ($U_{ind}$), das in der Erfassungsspule (202) induziert wird, während jeder Periode, **dadurch gekennzeichnet,**

**dass** die drei Werte $U_{max}$, $U_1$ und $U_2$ umfassen, wobei $U_{max}$ ein Spitzenwert des induzierten Signals ist und wobei die Vorrichtung konfiguriert ist, den Zeitpunkt zu bestimmen, in dem der Spitzenwert $U_{max}$ des in der Erfassungsspule induzierten sinusförmigen Signals ($U_{ind}$) zu messen ist,

und dadurch, dass die Vorrichtung ferner Folgendes umfasst:

- ein Signalverarbeitungssystem (404) zum Berechnen der Amplitude der Bewegung des Mikrospiegels (100) mit Hilfe der Werte $U_{max}$, $U_1$ und $U_2$ und Interpolieren der Werte $U_{max}$, $U_1$ und $U_2$, um die Position des Mikrospiegels (100) in jedem Zeitpunkt zu bestimmen.

10. Vorrichtung nach Anspruch 9, wobei die Detektionsschaltung (402) einen Operationsverstärker zum Verstärken des induzierten Signals umfasst.

11. Vorrichtung nach einem der Ansprüche 9 oder 10, wobei die Erregerschaltung eine Antriebsspule (204), die auf dem Mikrospiegel (100) positioniert ist, und ein System zum Einspeisen von Strom in die Antriebsspule (204) umfasst.

12. Vorrichtung nach Anspruch 11, wobei die Antriebsspule (204) die Erfassungsspule (202) ist.

13. Vorrichtung nach einem der Ansprüche 9 bis 12, wobei die Detektionsschaltung (402) eine Differenzialmessung erlaubt.

## Revendications

1. Procédé de mesure de l'amplitude du mouvement d'un micro-miroir (100) d'un dispositif MEMS (10 ; 10') oscillant au moyen d'un circuit d'actionnement, ledit dispositif comprenant un aimant (200) et une bobine de détection (202), un élément entre ledit aimant ou ladite bobine de détection étant placé sur une partie fixe (102) tandis que l'autre élément entre ledit aimant ou ladite bobine de détection est placé sur ledit micro-miroir (100), ledit procédé comprenant les étapes suivantes :

- déterminer l'instant auquel la valeur maximale $U_{max}$ d'un signal sinusoïdal ($U_{ind}$) induit dans la bobine de détection doit être mesurée,
- pendant chaque période (P) d'un signal sinusoïdal induit dans ladite bobine de détection (202) placée dans le champ magnétique (B) généré par ledit aimant (200), mesurer trois valeurs dudit signal périodique induit ($U_{ind}$) **caractérisé en ce que** les trois valeurs comprennent $U_{max}$, $U_1$ et $U_2$, $U_{max}$ étant un pic du signal induit, le procédé étant en outre **caractérisé par** les étapes suivantes :

- traiter lesdites valeurs $U_{max}$, $U_1$ et $U_2$ au moyen d'un système de traitement du signal (404) pour déterminer une valeur dépendant de l'amplitude dudit signal induit, et
- interpoler lesdites valeurs $U_{max}$, $U_1$ et $U_2$ pour déterminer la position à chaque instant dudit micro-miroir (100).

2. Procédé de la revendication 1, comportant une étape consistant à traiter lesdites valeurs $U_{max}$, $U_1$ et $U_2$ pour déterminer la fréquence de balayage dudit micro-miroir (100).

3. Procédé d'une des revendications 1 à 2, dans lequel ledit circuit d'actionnement comprend une bobine d'entraînement (204) placée sur ledit micro-miroir (100) dudit dispositif (10 ; 10') et un système pour injecter un courant dans ladite bobine d'entraînement (204).

4. Procédé de la revendication 3, dans lequel ladite bobine d'entraînement (204) est la bobine de détection (202).

5. Procédé de la revendication 4, comportant une étape consistant à traiter lesdites valeurs $U_{max}$, $U_1$ et $U_2$ pour déterminer une variation de valeurs de la résistance de ladite bobine d'entraînement (204).

6. Procédé d'une des revendications 3 à 5, comportant une étape consistant à traiter lesdites valeurs $U_{max}$, $U_1$ et $U_2$ pour déterminer la valeur du champ magnétique (B) généré par ledit aimant (200).

7. Procédé d'une des revendications 1 à 6, dans lequel le système de traitement du signal (404) est intégré dans ledit dispositif MEMS (10 ; 10').

**8.** Procédé d'une des revendications 3 à 7, dans lequel un courant dans ladite bobine d'entraînement (204) est coupé pendant ladite mesure.

**9.** Appareil comprenant
un dispositif MEMS à micro-miroir (10 ; 10') ayant une partie fixe (102) et un micro-miroir (100) qui peut osciller le long d'au moins un axe d'oscillation,

   - un aimant (200) et une bobine de détection (202), un élément entre ledit aimant ou ladite bobine de détection étant placé sur ladite partie fixe tandis que l'autre élément entre ledit aimant ou ladite bobine de détection oscille avec ledit micro-miroir (100),
   - un circuit d'actionnement pour générer une oscillation périodique dudit dispositif (10 ; 10') autour dudit axe d'oscillation,
   - un circuit de détection (402) pour détecter trois valeurs d'un signal sinusoïdal induit ($U_{ind}$) induit dans ladite bobine de détection (202) pendant chaque période,
   **caractérisé en ce que** les trois valeurs comprennent $U_{max}$, $U_1$ et $U_2$, $U_{max}$ étant un pic du signal induit, et l'appareil étant configuré pour déterminer l'instant auquel la valeur maximale $U_{max}$ du signal sinusoïdal ($U_{ind}$) induit dans la bobine de détection doit être mesurée,
   et **en ce que** l'appareil comprend en outre :

      - un système de traitement du signal (404) pour calculer l'amplitude du mouvement dudit micro-miroir (100) au moyen desdites valeurs $U_{max}$, $U_1$ et $U_2$ et interpoler lesdites valeurs $U_{max}$, $U_1$ et $U_2$ pour déterminer la position à chaque instant dudit micro-miroir (100).

**10.** Appareil de la revendication 9, dans lequel ledit circuit de détection (402) comprend un amplificateur opérationnel pour amplifier ledit signal induit.

**11.** Appareil d'une des revendications 9 ou 10, dans lequel ledit circuit d'actionnement comprend une bobine d'entraînement (204) placée sur ledit micro-miroir (100) et un système pour injecter un courant dans ladite bobine d'entraînement (204).

**12.** Appareil de la revendication 11, dans lequel ladite bobine d'entraînement (204) est ladite bobine de détection (202).

**13.** Appareil d'une des revendications 9 à 12, dans lequel ledit circuit de détection (402) permet une mesure différentielle.

Fig. 1

Fig. 2

Fig. 3

Fig. 4

202    100    202    10'

102    200    102

Fig. 5

200    10

100

102

104    104

204    202

Fig. 6a

Fig. 6b

Fig. 7

Fig. 8

Fig. 9

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009153932 A
- EP 2120011 A1
- EP 1515424 A2
- WO 0218979 A2
- US 2002163675 A1
- US 2006001940 A1
- EP 1275998 A1
- JP 2003177347 A